(19) **Europäisches Patentamt / European Patent Office / Office européen des brevets**

(11) **EP 3 769 900 B1**

(12) **EUROPEAN PATENT SPECIFICATION**

(45) Date of publication and mention of the grant of the patent:
**25.05.2022 Bulletin 2022/21**

(21) Application number: **20187099.5**

(22) Date of filing: **22.07.2020**

(51) International Patent Classification (IPC):
**B23K 26/352** $^{(2014.01)}$    **B23K 26/0622** $^{(2014.01)}$

(52) Cooperative Patent Classification (CPC):
**B23K 26/3568; B23K 26/0624;** B23K 2103/54

(54) **METHOD FOR STRUCTURING A TRANSPARENT SUBSTRATE WITH A LASER IN A BURST MODE**

VERFAHREN ZUR STRUKTURIERUNG EINES TRANSPARENTEN SUBSTRATS MIT EINEM LASER IN EINEM BURST-MODUS

PROCÉDÉ DE STRUCTURATION D'UN SUBSTRAT TRANSPARENT À L'AIDE UN LASER EN MODE RAFALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2019 US 201916523140**

(43) Date of publication of application:
**27.01.2021 Bulletin 2021/04**

(73) Proprietor: **Laser Engineering Applications**
**4102 Seraing (BE)**

(72) Inventors:
• **REED, Christopher**
**El Cajon, CA 92020 (US)**
• **BRAUNSCHWEIG, Robert**
**El Cajon, CA 92020 (US)**

(74) Representative: **Gevers Patents**
**Intellectual Property House**
**Holidaystraat 5**
**1831 Diegem (BE)**

(56) References cited:
**WO-A1-2017/191013    DE-A1-102018 200 029**
**US-A1- 2008 160 295**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

**Description**

**Technical field**

According to a first aspect, embodiments of the present disclosure relate to a method for structuring a transparent substrate with a laser. According to a second aspect, embodiments of the present disclosure relate to structured transparent substrate. According to a third aspect, embodiments of the present disclosure relate to a laser machining device for structuring a transparent substrate.

**Prior art**

Nowadays, it is possible to modify the structure of a transparent material with laser pulses.
EP 2 965 853 describes a method for processing materials with laser pulses wherein each emitted laser pulse induces a respective crack within the material. Structuring of material surfaces requires an energy density high enough; at the same time, induced cracks within the material should be avoided, or at least kept at a low level. Document DE 10 2018 200029 A1 discloses a method according to the preamble of claim 1 and a system according to the preamble of claim 13.
Material surface structuring is desirable for many applications but is rendered difficult to achieve by laser processing because of the formation of cracks within the material. The technical problem to solve is to provide a method for structuring a transparent material without inducing cracks in a controlled manner.

**Summary of the invention**

According to a first aspect, one of the objectives of the present invention is to provide a method for structuring a top surface of a substrate with the possibility to keep the formation of cracks within the substrate at a low level.
To this end, the inventors propose a method for structuring a top surface of a transparent substrate, said substrate being transparent to visible light and comprising the steps of:

  a) providing said transparent substrate with said top surface;
  b) providing a laser machining device comprising a laser source able to emit a laser beam in a burst mode, said burst mode being characterized by a train of pulses comprising sets of laser pulses repeated over time;
  c) using said laser source for irradiating said transparent substrate from its top surface with a laser beam according to said burst mode;

  - wherein said laser source is a femtosecond laser source;

  - wherein each of said sets of laser pulses of said train of pulses comprises a first and second pulse with a time interval between them comprised between 5 ns to 50 ns, preferably between 10 ns to 40 ns, and more preferably about 25 ns;
  - wherein each of said first and second pulses has an energy density on said top surface comprised between 0.5 nJ/um$^2$ and 50 nJ/um$^2$; and
  - wherein said train of pulses is able to structure said top surface.

In the method according to the invention, the control of the energy density and the irradiation of the material with a train of two pulses is key for structuring the top surface without inducing cracks within the substrate.
Burst mode is a feature which allows for shaping pulses into a group of pulses. This can be useful for manipulating the plasma dynamics created from the first pulse, or even improving the efficiency of the absorption of the second pulse.
The advantage of irradiating the substrate with a train of two pulses is to allow the formation of structures without inducing cracks to the substrate. Structures induced by the train of two pulses according to the invention are preferably smooth and without edges. Preferably the method of the invention is applied to a substrate having an ablation threshold being defined by an energy density per pulse, the transparent substrate being structured with laser pulses having energy densities slightly lower or slightly higher than the energy density ablation threshold.
The structure obtained by the method of the invention is on the top surface, the laser processing is a three-dimensional process where the laser pulse can achieve a certain skin depth for where a portion of the energy will be absorbed.
For example, for an ablation threshold of a substrate being defined by a laser power density per pulse of 50% of the maximum laser power density per pulse of the laser source with a given optical system, a slightly lower energy density than the energy density ablation threshold can be defined by a laser power density of 40% to just below 50%, preferably a laser power density of 43% to just below 50% and more preferably a laser power density of 46% to just below 50%.
For example, for an ablation threshold of a substrate being defined by a laser power density per pulse of 50% of the maximum laser power density per pulse of the laser source with a given optical system, a slightly higher energy density than the energy density ablation threshold can be defined by a laser power density of 60% to just above 50%, preferably a laser power density of 57% to just above 50% and more preferably a laser power density of 54% to just above 50%. For example, the laser power density per pulse is controlled by tuning the accousto-optic modulator with a KLM software.
A time interval of about 25 ns means a time interval between two pulses of a set of pulse having an interval between the onset of the first and the second of 25 ns or 25 ns plus or minus 5 ns, preferably plus or minus 2 ns and even more preferably plus or minus 1 ns that is to say a time interval between 20 ns and 30 ns, preferably 23 ns and 27 ns and even more preferably 24 ns to 26 ns. A laser system which has a low jitter is particularly important for reproducibility of the features. The delay or time interval can be adapted to the substrate and the feature size to be machined. The delay or time interval can be adjusted using a laser system with polarization optics and stages to recreate the burst with an adjusted delay.

The method according to the invention features other advantages. The burst mode allows to deliver a high energy dose to a defined spot for causing a structuration of the substrate without causing cracks. The same energy dose delivered with a single pulse rather than with a train of pulses would most probably induce cracks during the structuring of the substrate. The burst mode allows the usage of energy in a better way than with a single pulse. The method of the invention does not need heating up of the substrate during structuring of the substrate for reducing internal constraints. Said train of pulses is able to structure said top surface because it delivers energy on or near the substrate surface with a dose which is close to the energy ablation threshold. The ablation threshold being the energy needed for removing material per surface area.

Another advantage of the invention is to provide a structuring method allowing a better resolution of the structuration smaller than that of a diffraction limited spot size. Because the same amount of energy is delivered in at least two pulses, the energy delivered with the first pulse is stored in the substrate and then a relatively low energy density is required from the second pulse to structure the substrate. Because the energy density of the pulse enabling the structuring is relatively low, a good control in space of the pulse is possible and the energy delivered by said pulse does not spread or diffuse around. In another preferred embodiment of the invention, the time between said first and second pulse is comprised between 15 ns to 100 ns.

Substrate is transparent or semi-transparent to visible light, for example the substrate has a transparency that allows to see through with a human eye. For example, substrate has a transparency that allows sunlight to be transmitted, for example, with an absorption coefficient lower than 0.3, preferably lower than 0.2 and even more preferably lower than 0.1 in the wave length range 450 nm to 700 nm.

The inventors propose several preferred embodiments comprising optional features, where some of them can be combined.

Pulse duration is preferably defined as being the full width at half-maximum (FWHM) of the optical power versus time. Pulse duration can alternatively be defined as being an effective pulse duration, which is defined as the pulse energy divided by the peak power.

Time between two pulses is preferably the time between the maximum intensity of the two pulses or the time interval between the rising points or vanishing points of two laser pulses.

Although the substrate does not need heating up of the substrate, heating up the substrate may allow for a more efficient process compared to the state of the art.

Preferably, the ablation threshold could also be defined as being the energy required to break the bonds between atoms and molecules. The energy might be high enough that it is breaking the bonds below the surface and causing a localized expansion.

Preferably, other pulse features should be understood within the meaning of the present invention. For example a single pulse which has a large dip in energy in its center and showing two maxima around said dip. Said two maxima around said dip having a same energy density. Said two maxima around said dip having a first maximum which has an energy density lower than a second maximum or a first maximum which has an energy density higher than a second maximum. For example, pulses not being a Gaussian but having a flat top. For example, a pulse having a very jagged structure over its duration, preferably said pulse having a single pulse envelope. For example two pulses with two maxima, a first pulse having a maximum energy density lower than a second pulse or a first pulse having a maximum energy density higher than a second pulse.

The method of the invention can preferably be defined by a train of pulses, each set of pulses having an energy density on the substrate surface.

Preferably, before step c), the method comprises the additional step of:

- determining an ablation threshold of said transparent substrate being defined by an energy density per pulse;

said first and second pulses having an energy density on said top surface defined relative to said ablation threshold.

It is particularly advantageous to precisely determine the ablation threshold of a material for a given wavelength in order to be able to irradiate a substrate with an energy density per pulse around said ablation threshold. The ablation threshold is preferably determined by an energy per unit area required to break the atomic or molecular bonds.

Preferably said transparent substrate has an ablation threshold being defined by an energy density per pulse and in that said transparent substrate is structured with laser pulses having energy densities lower than the energy density ablation threshold such that said top surface of said transparent substrate is structured with domes.

The ablation threshold in a burst mode is the minimum energy density of a train of pulses for removing material from the substrate top surface. For example, for a chemically reinforced glass, an ablation threshold for a train of pulses with a femtosecond laser is of the order of 39 nJ/um$^2$. Preferably, the laser beam has a normal incidence with the substrate.

Preferably, the domes are formed with conservation of the material quantity, *i.e.* with no ablation of material.

Domes are preferably formed with no ablation of material. Domes are formed preferably because the train of pulses causes a material modification, for example a structural modification that modifies the volume of material and thus creating a dome. For example, gas bubble forms beneath the surface which causes a material deformation with a dome shape. Another example is that the laser in a burst mode allows a displacement of matter, forming a depression around the dome. The material forming the dome shape coming from the depression area around that dome shape.

Preferably, the transparent substrate having an ablation threshold being defined by an energy density per pulse and in that said transparent substrate is structured with laser pulses having energy densities higher than the energy density ablation threshold such that said top surface of said transparent substrate is structured with craters.

Craters are preferably formed with no edge. The advantage of the method of the invention is to be able to form craters with no edges and without introducing cracks in the substrate. Craters formed by the method of the invention can have a depth ranging for example between 0.5 um up to 15 um.

Preferably, the craters are formed with ablation of said transparent substrate.

Preferably, the laser source has a wavelength of 1030 nm.

Preferably, the first pulse has an energy density higher than of the second pulse.

The advantage of depositing a first pulse with a higher energy than a second pulse is that it gives a good reproducibility of the method and also a good control of the structuring process. For example, a laser source in burst mode, even with a uniform pulse density, provides a first pulse with a higher energy than the second pulse. This is particularly advantageous for a more energy-efficient substrate structuring.

Preferably, the substrate is a glass substrate.

Preferably, the substrate is a glass substrate for medical use.

Preferably, the substrate is an alkali-aluminosilicate glass substrate.

Preferably, the laser machining device comprises a deflection device for guiding said laser beam on said top surface of said transparent substrate.

Preferably, the deflection device is a scanner.

Preferably, the laser machining device comprises driving means for positioning said top surface of said transparent substrate relative to said laser beam.

Preferably, the laser machining device comprises focusing means for focusing said laser beam in the vicinity of said top surface of said transparent substrate.

Preferably, the laser beam is focused on said top surface of said transparent substrate.

Preferably, the laser beam is focused below said top surface of said transparent substrate.

Preferably, the laser beam is focused above said top surface of said transparent substrate.

Preferably, it is possible to adjust the structuring size, *i.e.* height or depth of the substrate, by adjusting the energy density per pulse. Preferably, it is possible to adjust the structuring of the substrate by adjusting the focal plane of the laser beam regarding the surface of the substrate, for example the focus on the substrate surface.

According to a second aspect, the inventors suggest a structured transparent substrate characterized in that it comprises dome structures, said dome structures having:

- an essentially circular base with a perimeter comprised between 1 um and 10 um, more particularly between 2 um and 8 um, and even more particularly between 2.5 um and 5 um,
- a height comprised between 50 nm and 500 nm, more particularly between 60 nm and 300 nm, and even more particularly between 100 nm and 200 nm,
- a structure density comprised between 1000 and 20000 domes per mm$^2$, more particularly between 3000 and 15000 domes per mm$^2$, and even more particularly between 5000 and 10000 domes per mm$^2$.

The advantages and different variants described for the method according to the first aspect of the invention also apply to the substrate according to the second aspect of the invention, *mutatis mutandis.*

According to a third aspect, the inventors suggest a system for structuring transparent substrates with laser bursts comprising:

- a transparent substrate having a top surface;
- a machining device comprising:

    o a laser source,
    o an optical system for obtaining a laser beam from said laser source focused in the vicinity of said transparent substrate top substrate,

characterized in that said laser source is a femtosecond laser source for emitting two laser pulses in a burst mode,

- said burst mode defining a train of a first pulse and a second pulse with a time between said first and second pulse comprised between 5 ns to 50 ns, preferably between 10 ns to 40 ns, and more preferably about 25 ns.
- said first pulse and said second laser pulses having energy densities comprised between 0.5 nJ/um² and 50 nJ/um²,
- said train of first and second pulses allowing for structuring said transparent substrate top surface.

The advantages and different variants described for the method and substrate according to the first and second aspects of the invention also apply to the system according to the third aspect of the invention, *mutatis mutandis.*

Preferably, the machine device comprises additionally:

- deflecting means for deflecting said focused laser beam from a first spot to a second spot on said top surface.

For example, deflecting means comprises a scanner for deflecting the laser beam on a substrate surface area of about 20 mm x 20 mm in association with a 60 mm focusing lens. For example, the surface covered by the laser beam on the substrate surface is dependent of the associated focusing lens. For example, processing of large surface area is possible with such deflecting module by stitching areas covered by the deflecting means with driving means.

Preferably, the machining device comprises additionally:

- driving means for moving said transparent substrate relative to said deflecting means.

For example stitching is possible with driving means such that it can move the substrate along at least two axes, and preferably along three axes.

Preferably, the system of the invention further comprises a 60 mm f(θ) lens, a 5x beam expander, the laser beam out of the laser source having a diameter of about 2.8 mm and the final beam diameter on the substrate surface having a spot size of about 15 um ± 2 um. For example features on the surface having a size of about 2 to 5 um can be obtained with a measured spot size of about 15 um ± 2 um. For example, the laser source has a repetition rate of 500 KHz.

The advantages and different variants described for the method according to the first aspect of the invention also apply to the system according to the third aspect of the invention, *mutatis mutandis.*

Preferably, the structured transparent substrate is structured with a laser beam energy density on the substrate surface comprised between 0.5 nJ/um²/pulse and 3.2 nJ/um²/pulse such that it is structured with domes.

## Brief description of the figures

These aspects of the invention as well as others will be explained in the detailed description of specified embodiments of the invention, with reference to the drawings in the figures, in which:

- Fig. 1 shows a schematic representation of two trains of pulses in an Energy versus Time diagram;
- Fig. 2a and Fig. 3a show the surface topology of a substrate area after structuring according to the first aspect of the invention with energy intensities lower than the ablation threshold of the substrate;
- Fig. 2b and Fig. 3b show the profile of each features structured according to the first aspect of the invention with energy intensities lower than the ablation threshold of the substrate obtained for Fig. 2a and Fig. 3a respectively;
- Fig. 4 shows the surface topology of a large substrate area after structuring according to the first aspect of the invention with energy intensities lower than the ablation threshold of the substrate;
- Fig 5a shows the surface topology of a substrate area after structuring according to the first aspect of the invention with energy intensities higher than the ablation threshold of the substrate, Fig. 5b shows the height profile of each features structured shown on Fig. 5a;

- Fig 6 shows a matrix of craters with increasing numbers of pulses and pulse energies for determining the ablation threshold according to a $D^2$ method;
- Fig 7a and 7b show in Fig. 7a the displacement of the sample in the direction of the Y and Z axes for the implementation of the D-Scan method and in Fig. 7b the ablation lobes resulting from the implementation of the experimental protocol of Fig.7a;
- Fig 8a, 8b, 8c, 8d, 8e, and 8f show several embodiments of pulse or pulses within the meaning of the present invention.

The drawings in the figures are not to scale. Generally, similar elements are designated by similar reference signs in the figures. The presence of reference numbers in the drawings is not to be considered limiting, even when such numbers are also included in the claims.

## Detailed description of some embodiments of the invention

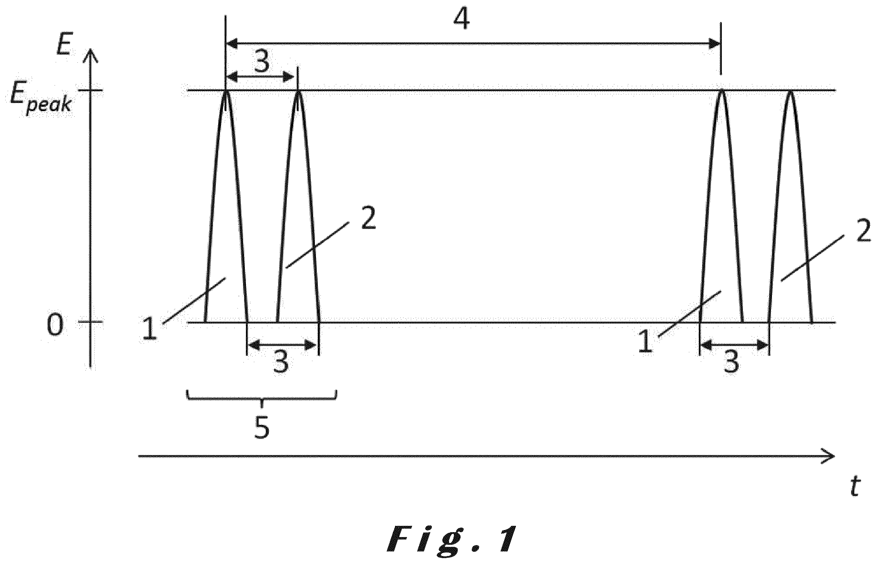

Figure 1 shows an exemplary embodiment of the laser in burst mode. Figure 1 shows a diagram with a first pulse 1 having a maximum energy $E_{peak}$, a rise in energy starting from no energy to $E_{peak}$, and a decrease in energy starting from $E_{peak}$ to no energy. A second pulse 2 is shown having a maximum energy $E_{peak}$, a rise in energy starting from no energy to $E_{peak}$, and a decrease in energy starting from $E_{peak}$ to no energy. The time between the first pulse 1 and the second pulse 2 is shown by the interval 3. The interval 3 can be defined from the rise from no energy to a pulse energy as shown on the right-hand side of Figure 1. The interval 3 can be defined from the decay from a pulse energy to no energy as shown on the left-hand side of Figure 1. The point showing a rise of the pulse energy from no energy or the point showing a decay of energy to no energy might be defined regarding a defined level of energy such as an energy baseline. The train 5 of the first 1 and second 2 pulses can be reproduced after a time interval 4. For example, the time interval 4 corresponds to the time necessary to move a deflection element from a first position to a second position for structuring another position on a substrate. For example, the time interval 4 corresponds to the time for moving the substrate relative to the laser machining device. Figure 1 typically shows a scan for testing the effect of the burst mode at various energies, for example to performed on a glass substrate.

For example, an energy density on the substrate surface can be determined as follows for a laser beam diameter on the substrate surface of 17 um (beam area of a pulse diameter of 17 um ~ 227 um$^2$) and an energy per pulse deposited on a substrate being comprised between 0.2 $\mu$J and 3.0 $\mu$J:

| energy per pulse | energy density per pulse |
| --- | --- |
| 0.2 uJ | 0,9 nJ/um$^2$/pulse |
| 0.4 uJ | 1,8 nJ/um$^2$/pulse |
| 0.6 uJ | 2,6 nJ/um$^2$/pulse |
| 0.8 uJ | 3,5 nJ/um$^2$/pulse |
| 1.0 uJ | 4,4 nJ/um$^2$/pulse |
| 1.2 uJ | 5,3 nJ/um$^2$/pulse |
| 1.5 uJ | 6,6 nJ/um$^2$/pulse |
| 2.0 uJ | 8,8 nJ/um$^2$/pulse |
| 2.5 uJ | 11,0 nJ/um$^2$/pulse |
| 3.0 uJ | 13,2 nJ/um$^2$/pulse |

For example, the energy density per pulse is applied with a laser emitting around 1030 nm.

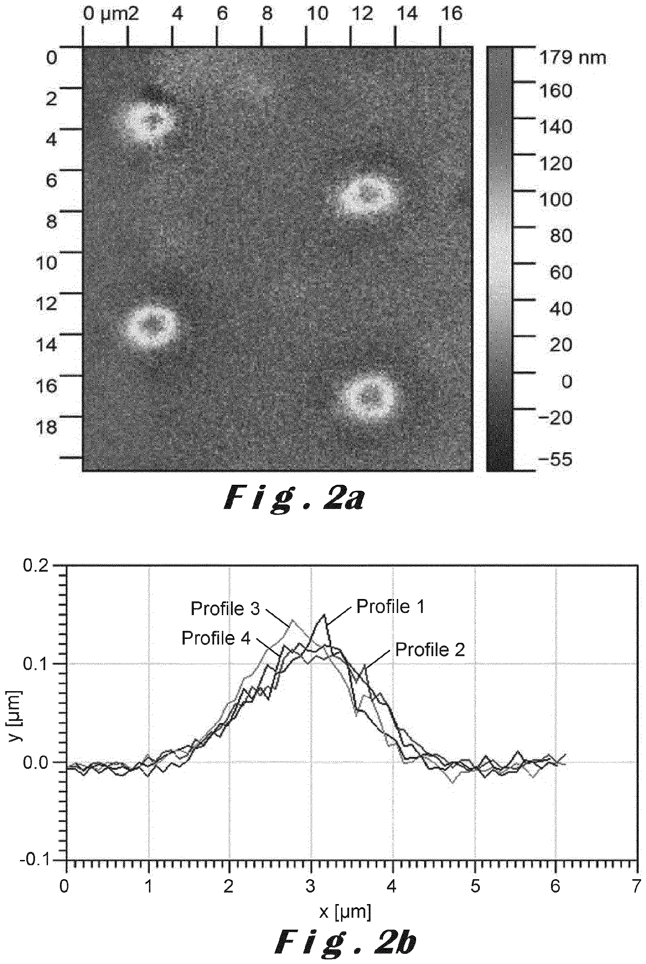

Figure 2a shows a topology image of a substrate area of about 18 um per 18 um where four structuring were performed by applying for each structure a train of two pulses as shown in Figure 1. Each train of two pulses was applied with the same experimental conditions. Each dome was a series of only one set of pulses, said set of pulses having an energy of 1.21 uJ, said set of pulse comprising said first and said second pulse 17um spot. Figure 2a and 2b were measured with a white light interferometer.

On Figure 2a, the height of the transparent substrate is shown by the homogenous color or greyscale and the structures are shown by the four circular shapes. These structures are domes for which the height regarding the surface of the substrate is shown on the scale on the right-hand side of Figure 2a. The center of each structure corresponds to a height of about 160 nm to 180 nm. It can be seen that the structuring results obtained are very reproducible, both regarding the shape of the structures and the height at the center of the structures. Figure 2b shows four height profiles of the four structures shown on Fig 2a. The results shown on Fig. 2b corroborate the good reproducibility of the structures obtained with structuring the substrate with the method of the invention. The profiles of each four structures show profiles having similar heights and widths. On Figure 2b, maximal heights are comprised between 0.11 um and 0.15 um and the width of the structures at their bases is of about 3.5 um.

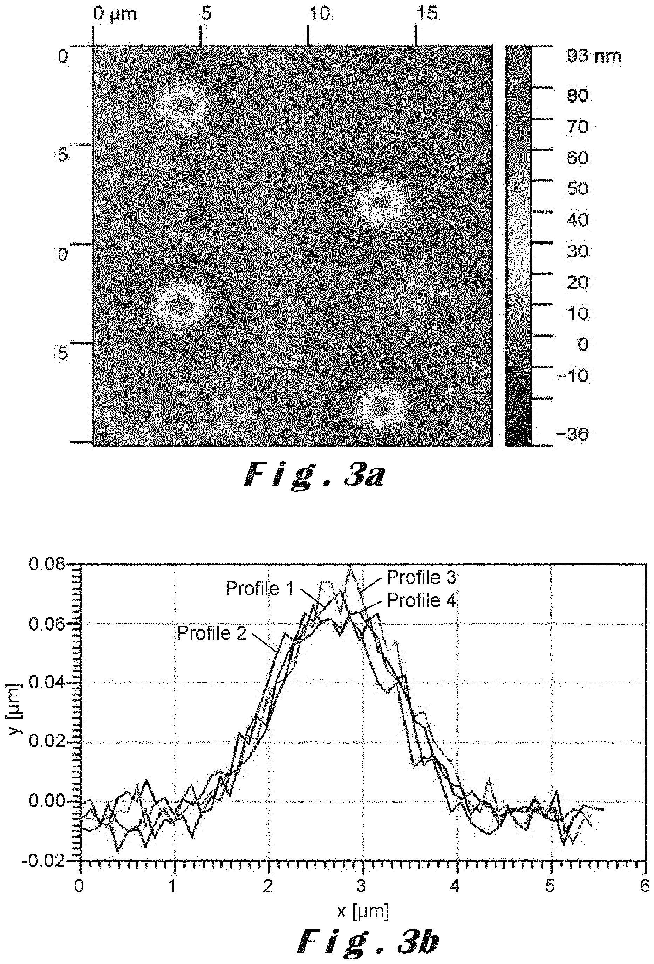

Figure 3a shows a topology image of a substrate area of about 18 um per 18 um where four structures were fabricated by applying for each structure a train of two pulses as shown in Figure 1. Each train of two pulses was applied with the same experimental conditions. Each train of two pulses having an energy of 1.21 uJ, said set of pulse comprising said first and said second pulse 17um spot. Figure 3a was measured with a white light interferometer.

Figure 3a and 3b show similar results than already described for Figure 2a and 2b but obtained with different structuring parameters. The domes on Figure 3a show height of about 70 nm to 90 nm. The structures on Figure 3a are very similar to each other. Their corresponding profiles shown on Figure 3b gives maximal heights that are comprised between 0.065 um and 0.080 um and the width of the structures at their bases is of about 2.5 um.

Figures 2a, 2b, 3a and 3b show that with the structuring method of the invention and more particularly when pulse energy densities are below the ablation threshold of the substrate, a good control of the formed structures is obtained. The structuring method parameter allows control of the height and width as shown in Figures 2a, 2b, 3a and 3b with a very good reproducibility of the formed structures.

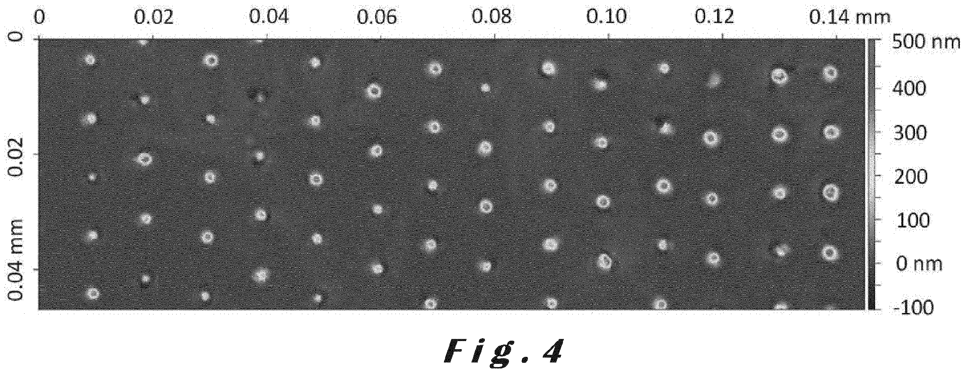

Figure 4 shows another example of a surface structured by the method of the invention. Figure 4 shows a substrate surface area of about 0.05 mm x 0.15 mm. The domes on Figure 4 show maximum height for most of the structures of about 400 nm to 500 nm.

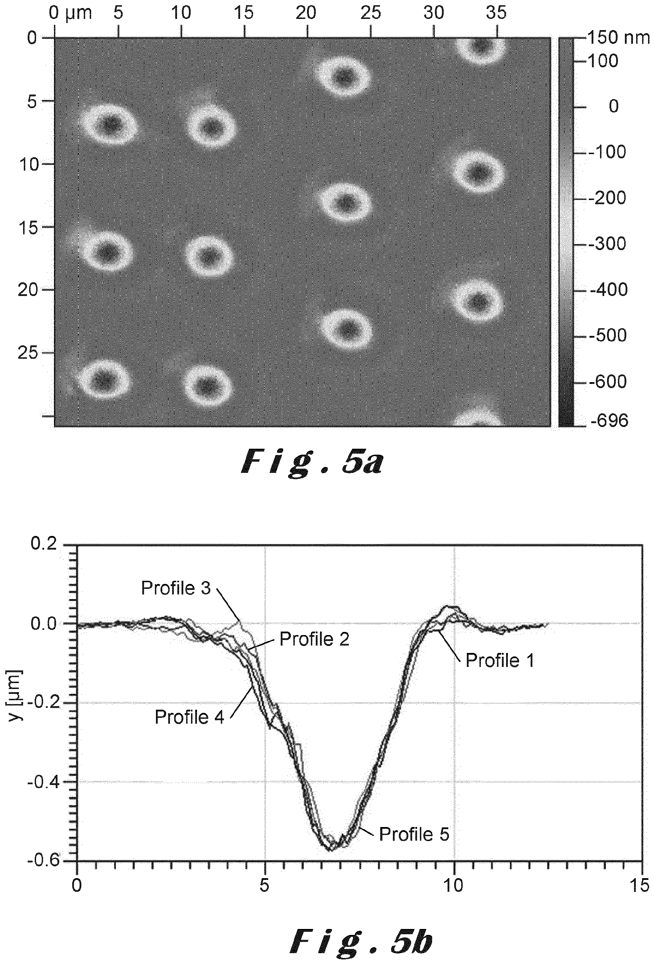

Figure 5a shows a topology image of a substrate area of about 30 um per 40 um where four structures were fabricated by applying for each structure a train of two pulses as shown in Figure 1. Each train of two pulses was applied with the same experimental conditions. Each train of two pulses having an energy of 1.55 uJ, said set of pulse comprising said first and said second pulse 17um spot. Figure 5a was measured with a white light interferometer. Figure 5b shows five height profiles of four structures shown on Fig 5a. The results shown in Fig. 5b corroborate the good reproducibility of the structures obtained with structuring the substrate with the method of the invention. The five profiles shown have similar heights and widths. On Figure 5b, depth of each feature is comprised between 0.56 um and 0.58 um and the width of each ablated features at their bases is of about 6 um (horizontal axis unit being um).

Characterization of the structured substrate is preferably carried out with white light interferometer, confocal microscope, or profilometer.

### Determining the ablation threshold by the D² method.

The determination of the ablation threshold by the D² method is the most accepted and the most used to determine the ablation threshold of all types of materials. This method is used for Gaussian beam energy profiles. This method has the advantage of offering the possibility of estimating the radius of the Gaussian beam $\omega$ on the surface of the material and the incubation coefficient.

Fluence (or energy density) in a plane perpendicular to the axis of the laser beam is given by:

$$F(r) = F_0 \exp\left(\frac{-2r^2}{\omega^2}\right), \qquad (1)$$

where r is the distance to the axis of the beam, $\omega^2$ the radius of the beam at the surface of the material at $e^{-2}$ of the maximum intensity. If the beam is focused on the surface, $\omega = \omega_0$. Fo is the maximum fluence (at r = 0) and is calculated and given by:

$$F_0 = \frac{2E_P}{\pi\omega^2}. \qquad (2).$$

The diameter of an ablation crater produced with one or more laser pulses can be described according to the maximum fluence:

$$D^2 = 2\omega^2 \ln\left(\frac{F_0}{F_{th}}\right), \qquad (3)$$

where $F_{th}$ is the ablation threshold. Since Fo increases linearly with $E_P$, the radius of the beam $\omega$ can be estimated from the graph of crater diameters $D^2$ as a function of the logarithm of the pulse energy, using equation 3. The radius $\omega$ can be calculated from the slope of a curve defined by the experimental results:

$$\omega = \sqrt{\frac{slope}{2}}. \qquad (4)$$

The ablation threshold can be calculated by extrapolating the crater diameter at power 2 to a crater diameter equal to zero in a graph representing crater diameter at power 2 ($D^2$) as a function of the logarithm of the energy per pulse.

Generally, the ablation threshold decreases by increasing the number of incident pulses for the same point on the surface of the material to be machined. This behavior is attributed to the increase in radiation absorptivity caused by the accumulation of defects created at each impulse, even at fluences lower than the threshold fluence. Such an increase in radiation absorptivity can be characterized by a factor or incubation coefficient, expressed by the following equations (5) and (6):

$$F_{th}(N) = F_{th}(1) \times N^{S-1} \qquad (5)$$

When $F_{th}(N)$ is the fluence of the ablation threshold for N pulses, $F_{th}(1)$ is the fluence of the ablation threshold for a single pulse and S is the incubation coefficient. S = 1 means that there is no incubation, i.e. the ablation threshold is independent of the number of pulses. For most materials S <1, the ablation threshold decreases with the increase in the number of pulses.

In general, the incubation or decrease of the threshold fluence is more pronounced during the first 100 pulses for a large majority of materials and in particular for the materials most commonly used.

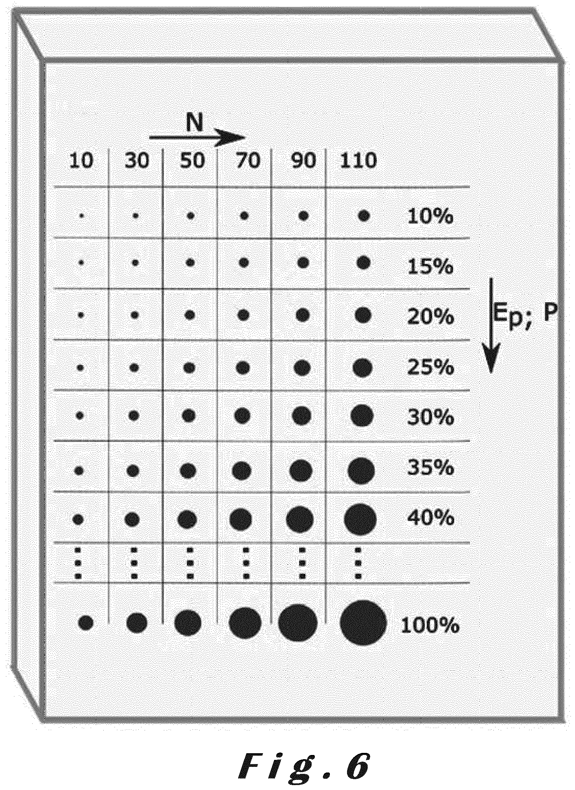

To apply the D² method to find the ablation threshold, the incubation coefficient and, if necessary, the beam radius, we need to produce a crater matrix with increasing numbers of pulses and pulse energies, as illustrated in Figure 6. To have sufficient experimental points, it is necessary to have at least 20 energy values, and several pulse number values less than 100 pulses. The diameter of each crater must be measured from images obtained with an optical or electronic microscope.

### Determination of the ablation threshold by the Diagonal Scan method.

The Diagonal-Scan or D-Scan method is a geometric method for determining the value of the ablation threshold. The D-Scan method is an alternative method to the D² method, it has the advantage of being more efficient and faster in terms of time of experiments and numbers of measurements to be made. The disadvantage of this method with respect to the D² is related to the method for determining the beam radius, a value that is always important for measurements and calculation of the parameters.

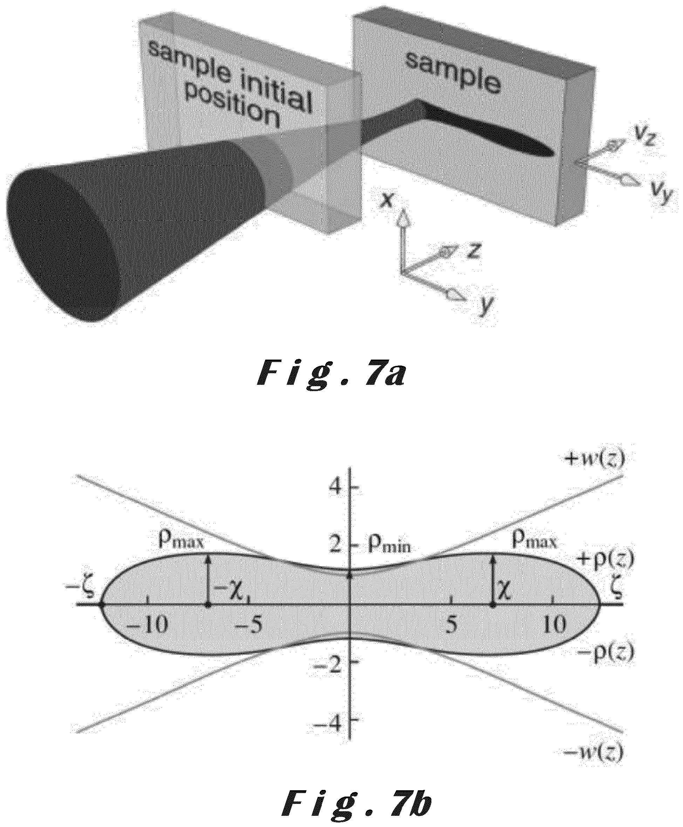

The Diagonal-Scan method consists in moving the sample diagonally with respect to the focal point of the beam using different beam energies and a variable number of pulses, while changing the speed of displacement (Figures 7a and 7b). The experiments making it possible to implement the D-Scan method provide for the determination of the ablated surface. The ablated surface corresponds to the points for which the power of the radiation has exceeded a critical value defined by:

$$P_{crit} = \frac{1}{2}e\pi\omega_0^2 I_{th}, \quad (7)$$

where $I_{th}$ is the ablation threshold in terms of intensity, given by:

$$I_{th} = \frac{P_0}{e\pi\rho_{max}^2}, \quad (8)$$

where Po is the maximum pulse power and $\rho_{max}$ is the maximum width of the ablated region (Figure 7a and 7b). The ablation threshold is given by:

$$F_{th} = I_{th}\tau_p, \quad (10)$$

where $\tau_p$ is the pulse duration.

To apply the D-Scan method to find the ablation threshold and the incubation coefficient, it is necessary to produce scans as shown in Figure 7a and 7b, with different values of energy and speed of movement to have measurements for different numbers of superimposed pulses. The number of pulses superimposed on the points corresponding to the larger part of the lobes is given by:

$$N = \sqrt{\pi}\frac{f \times \rho_{max}}{v_y}, \quad (11)$$

where f is the pulse frequency and $v_y$ is the speed in the direction of the y axis.

Figure 6 shows a crater matrix to be machined in order to be able to implement the determination of the ablation threshold by the $D^2$ method. Figure 6 depicts a preferred embodiment for producing a crater matrix with the laser machining machine of the invention. The matrix shown in figure 6 shows a number of pulses for each of the columns between 10 and 110 and beam energies of between 10% and 100% of a maximum beam value that can be provided by the laser machining machine. of the invention. The realization of such a matrix of craters by respecting the beam energies and the numbers of pulses indicated followed by the topological and or dimensional characterization of the craters of this matrix thus makes it possible to define an ablation threshold, an incubation coefficient or a beam radius. Preferably the production of the crater matrix should be performed with increasing numbers of pulses and pulse energies, as illustrated by the arrows in Figure 6. To have sufficient experimental points, it is necessary to have at least twenty values. The diameter of each crater can be measured from images obtained with an optical or electronic microscope or a profilometer.

Figure 7a describes the relative displacement of the sample in the direction of the Y and Z axes for the implementation of the D-Scan method and in Fig. 7b the ablation lobes resulting from the implementation of the experimental protocol of Fig.7a.

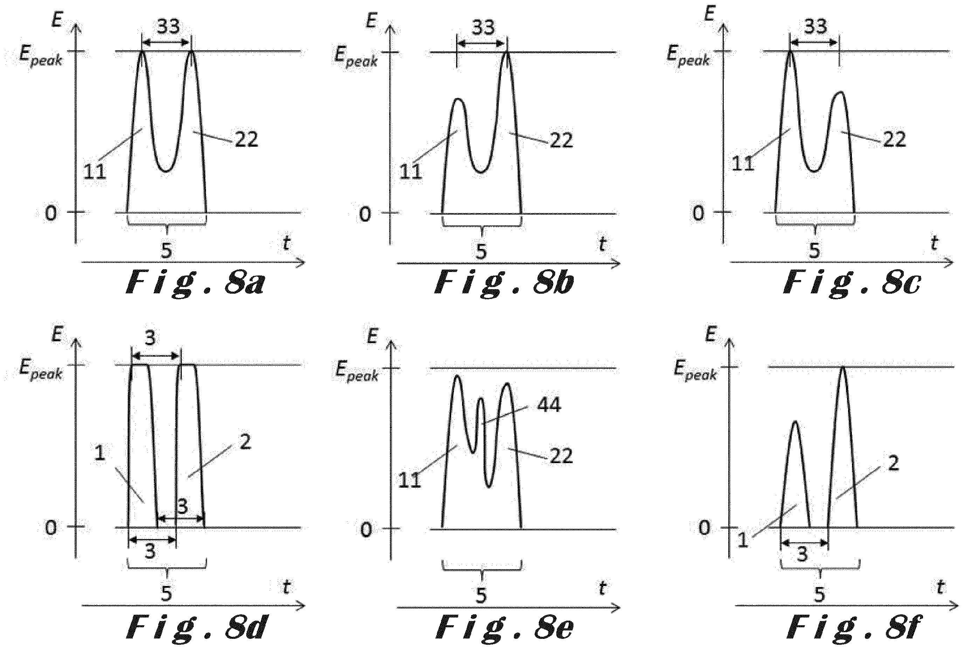

Figure 8a to 8f shows a pulse or pulses which should be understood within the meaning of the present invention. Figure 8a, 8b and 8c show a single pulse which has a large dip in energy in its center and showing two maxima around said dip. Figure 8a shows two maxima having a same maximum energy density. Figure 8b shows two maxima, a first maximum 11 having an energy density lower than a second maximum 22. Figure 8c shows two maxima, a first maximum 11 having an energy density higher than a second maximum 22. Figure 8d shows pulses not being a Gaussian but having a flat top. Figure 8e shows a single pulse having a very jagged structure over its duration. Figure 8f shows two pulses with two maxima, a first pulse 1 having a maximum energy density lower than a second pulse 2. Two pulses with two maxima could also have a first pulse 1 having a maximum energy density higher than a second pulse 2.

According to a third aspect, the inventors suggest a system for structuring transparent substrate. The system comprises optical modules for shaping the laser beam; a beam expander and preferably an attenuator.

The present invention has been described with reference to specific embodiments, the purpose of which is purely illustrative, and they are not to be considered limiting in any way. In general, the present invention is not limited to the examples illustrated and/or described in the preceding text. Use of the verbs "comprise", "include", "consist of", or any other variation thereof, including the conjugated forms thereof, shall not be construed in any way to exclude the presence of elements other than those stated. Use of the indefinite article, "a" or "an", or the definite article "the" to introduce an element does not preclude the presence of a plurality of such elements. The reference numbers cited in the claims are not limiting of the scope thereof.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others without departing from the scope of the claims.

## Claims

1. Method for structuring a top surface of a transparent substrate, said substrate being transparent to visible light and comprising the steps of:

   a) providing said transparent substrate with said top surface;
   b) providing a laser machining device comprising a laser source able to emit a laser beam in a burst mode, said burst mode being **characterized by** a train of pulses comprising sets (5) of laser pulses repeated over time;
   c) using said laser source for irradiating said transparent substrate from its top surface with a laser beam according to said burst mode;

   - **characterized in that** said laser source is a femtosecond laser source;
   - wherein each of said sets (5) of laser pulses of said train of pulses comprises a first (1) and second (2) pulse with a time interval (3) between them comprised between 5 ns to 50 ns, preferably between 10 ns to 40 ns, and more preferably about 25 ns;
   - wherein each of said first (1) and second (2) pulses has an energy density on said top surface comprised between 0.5 nJ/um$^2$ and 50 nJ/um$^2$; and
   - wherein said train of pulses (5) is able to structure said top surface.

2. Method according to claim 1 wherein it comprises, before step c), the additional step of:

   - determining an ablation threshold of said transparent substrate being defined by an energy density per pulse;

   said first (1) and second (2) pulses having an energy density on said top surface defined relative to said ablation threshold.

3. Method according to claim 2 wherein said transparent substrate has an ablation threshold being defined by an energy density per pulse and in that said transparent substrate is structured with laser pulses having energy densities lower than the energy density ablation threshold such that said top surface of said transparent substrate is structured with domes.

4. Method according to claim 3 wherein said domes are formed with conservation of the material quantity.

5. Method according to claim 2 wherein said transparent substrate having an ablation threshold being defined by an energy density per pulse and in that said transparent substrate is structured with laser pulses having energy densities higher than the energy density ablation threshold such that said top surface of said transparent substrate is structured with craters.

6. Method according to claim 5 wherein said craters are formed with ablation of said transparent substrate.

7. Method according to anyone of the preceding claims wherein said first (1) pulse has an energy density higher than of said second pulse (2).

8. Method according to anyone of the preceding claims wherein said transparent substrate is a glass substrate, preferably, an alkali-aluminosilicate glass substrate.

9. Method according to anyone of the preceding claims wherein said laser beam is focused on said top surface of said transparent substrate.

10. Method according to anyone of claims 1 to 8 wherein said laser beam is focused below said top surface of said transparent substrate.

11. Structured transparent substrate obtainable by a method according to claim 3 or 4 and comprising dome structures having:

    - an essentially circular base with a perimeter comprised between 1 um and 10 um, more particularly between 2 um and 8 um, and even more particularly between 2.5 um and 5 um,
    - a height comprised between 50 nm and 500 nm, more particularly between 60 nm and 300 nm, and even more particularly between 100 nm and 200 nm,
    - a structure density comprised between 1000 and 20000 domes per mm$^2$, more particularly between 3000 and 15000 domes per mm$^2$, and even more particularly between 5000 and 10000 domes per mm$^2$.

12. Structured transparent substrate according to claim 11 wherein it is structured with a laser beam energy density on the substrate surface comprised between 0.5 nJ/um$^2$/pulse and 3.2 nJ/um$^2$/pulse such that it is structured with domes.

13. System for structuring transparent substrates with laser bursts comprising:

    - a transparent substrate having a top surface;
    - a machining device comprising:

      ○ a laser source,
      ○ an optical system for obtaining a laser beam from said laser source focused in the vicinity of said transparent substrate top substrate,

**characterized in that** said laser source is a femtosecond laser source for emitting two laser pulses (1, 2) in a burst mode,

- said burst mode defining a train of a first pulse (1) and a second pulse (2) with a time between said first (1) and second (2) pulse comprised between 5 ns to 50 ns, preferably between 10 ns to 40 ns, and more preferably about 25 ns,
- said first (1) pulse and said second (2) laser pulses having energy densities comprised between 0.5 nJ/um$^2$ and 50 nJ/um$^2$,
- said train of first (1) and second (2) pulses allowing for structuring said transparent substrate top surface.

14. System according to claim 13 wherein said machining device comprises additionally:

- deflecting means for deflecting said focused laser beam from a first spot to a second spot on said top surface.

15. System according to claim 13 or 14 wherein said machining device comprises additionally:

- driving means for moving said transparent substrate relative to said deflecting means.

**Patentansprüche**

1. Verfahren zum Strukturieren einer Oberfläche eines transparenten Substrats, wobei das Substrat für sichtbares Licht transparent ist und die folgenden Schritte umfasst:

a) Bereitstellen des transparenten Substrats mit der Oberfläche;
b) Bereitstellen einer Laserbearbeitungsvorrichtung, die eine Laserbearbeitungsquelle umfasst, die geeignet ist, einen Laserstrahl in einem Burstmodus auszustrahlen, wobei der Burstmodus durch eine Reihe von Impulsen gekennzeichnet ist, die Sätze (5) von Laserimpulsen umfasst, die im Laufe der Zeit wiederholt werden;
c) Verwenden der Laserquelle zum Bestrahlen des transparenten Substrats von seiner Oberfläche mit einem Laserstrahl gemäß dem Burstmodus;

**dadurch gekennzeichnet, dass**
die Laserquelle eine Femtosekunden-Laserquelle ist;

- wobei jeder der Sätze (5) von Laserimpulsen der Reihe von Impulsen einen ersten (1) und zweiten (2) Impuls mit einem dazwischen liegenden Zeitintervall (3) umfasst, das zwischen 5 ns und 50 ns, bevorzugt zwischen 10 ns und 40 ns und bevorzugter etwa 25 ns beträgt;
- wobei jeder des ersten (1) und zweiten (2) Impulses eine Energiedichte auf der Oberfläche zwischen 0,5 nJ/um$^2$ und 50 nJ/um$^2$ aufweist; und
- wobei die Reihe von Impulsen (5) geeignet ist, die Oberfläche zu strukturieren.

2. Verfahren nach Anspruch 1, wobei es vor Schritt c) den zusätzlichen Schritt umfasst zum:

- Bestimmen einer Ablationsschwelle des transparenten Substrats, die durch eine Energiedichte pro Impuls definiert ist;

wobei der erste (1) und zweite (2) Impuls eine Energiedichte auf der Oberfläche aufweisen, die relativ zu der Ablationsschwelle definiert ist.

3. Verfahren nach Anspruch 2, wobei das transparente Substrat eine Ablationsschwelle aufweist, die durch eine Energiedichte pro Impuls definiert ist, und das transparente Substrat mit Laserimpulsen strukturiert wird, die geringere Energiedichten als die Energiedichte-Ablationsschwelle aufweisen, sodass die Oberfläche des transparenten Substrats mit Kuppeln strukturiert ist.

4. Verfahren nach Anspruch 3, wobei die Kuppeln unter Beibehaltung der Materialmenge gebildet werden.

5. Verfahren nach Anspruch 2, wobei das transparente Substrat eine Ablationsschwelle aufweist, die durch eine Energiedichte pro Impuls definiert ist, und das transparente Substrat mit Laserimpulsen strukturiert wird, die höhere Energiedichten als die Energiedichte-Ablationsschwelle aufweisen, sodass die Oberfläche des transparenten Substrats mit Kratern strukturiert ist.

6. Verfahren nach Anspruch 5, wobei die Krater mit Ablation des transparenten Substrats gebildet werden.

7. Verfahren nach einem der vorstehenden Ansprüche, wobei der erste (1) Impuls eine höhere Energiedichte als der zweite Impuls (2) aufweist.

8. Verfahren nach einem der vorstehenden Ansprüche, wobei das transparente Substrat ein Glassubstrat, bevorzugt ein Alkalialuminosilicat-Glassubstrat ist.

9. Verfahren nach einem der vorstehenden Ansprüche, wobei der Laserstrahl auf die Oberfläche des transparenten Substrats fokussiert ist.

10. Verfahren nach einem der Ansprüche 1 bis 8, wobei der Laserstrahl unter der Oberfläche des transparenten Substrats fokussiert ist.

11. Strukturiertes transparentes Substrat, das durch ein Verfahren nach Anspruch 3 oder 4 erhältlich ist und Kuppelstrukturen umfasst mit:

   - einer im Wesentlichen kreisförmigen Basis mit einem Umfang zwischen 1 um und 10 um, insbesondere zwischen 2 um und 8 um und ganz besonders zwischen 2,5 um und 5 um,
   - einer Höhe zwischen 50 nm und 500 nm, insbesondere zwischen 60 nm und 300 nm und ganz besonders zwischen 100 nm und 200 nm,
   - einer Strukturdichte zwischen 1000 und 20000 Kuppeln pro $mm^2$, insbesondere zwischen 3000 und 15000 Kuppeln pro $mm^2$ und ganz besonders zwischen 5000 und 10000 Kuppeln pro $mm^2$.

12. Strukturiertes transparentes Substrat nach Anspruch 11, wobei es mit einer Laserstrahlenergiedichte auf der Substratoberfläche zwischen 0,5 $nJ/um^2$/Impuls und 3,2 $nJ/um^2$/Impuls strukturiert wird, sodass es mit Kuppeln strukturiert ist.

13. System zum Strukturieren transparenter Substrate mit Laserbursts, umfassend:

   - ein transparentes Substrat mit einer Oberfläche;
   - eine Bearbeitungsvorrichtung, umfassend:

      ◦ eine Laserquelle,
      ◦ ein optisches System zum Erhalten eines Laserstrahls von der Laserquelle, der in der Nähe der Oberfläche des transparenten Substrats fokussiert ist,

   **dadurch gekennzeichnet, dass**
   die Laserquelle eine Femtosekunden-Laserquelle zum Ausstrahlen von zwei Laserimpulsen (1, 2) in einem Burstmodus ist,

   - wobei der Burstmodus eine Reihe aus einem ersten Impuls (1) und einem zweiten Impuls (2) mit einer Zeit zwischen dem ersten (1) und zweiten (2) Puls von 5 ns bis 50 ns, bevorzugt 10 ns bis 40 ns und bevorzugter von etwa 25 ns definiert,
   - der erste (1) Impuls und die zweiten (2) Laserimpulse Energiedichten zwischen 0,5 $nJ/um^2$ und 50 $nJ/um^2$ aufweisen,
   - die Reihe des ersten (1) und zweiten (2) Impulses ein Strukturieren der Oberfläche des transparenten Substrats erlaubt.

14. System nach Anspruch 13, wobei die Bearbeitungsvorrichtung zusätzlich umfasst:

   - Ablenkmittel zum Ablenken des fokussierten Laserstrahls von einem ersten Punkt zu einem zweiten Punkt auf der Oberfläche.

15. System nach Anspruch 13 oder 14, wobei die Bearbeitungsvorrichtung zusätzlich umfasst:

   - Antriebsmittel zum Bewegen des transparenten Substrats relativ zu dem Ablenkmittel.

**Revendications**

1. Procédé pour structurer une surface supérieure d'un substrat transparent, ledit substrat étant transparent à la lumière visible et comprenant les étapes de :

   a) fournir ledit substrat transparent avec ladite surface supérieure ;
   b) fournir un dispositif d'usinage laser comprenant une source laser capable d'émettre un faisceau laser dans un mode rafale, ledit mode rafale étant **caractérisé par** un train d'impulsions comprenant des ensembles (5) d'impulsions laser répétées dans le temps ;
   c) utiliser ladite source laser pour irradier ledit substrat transparent à partir de sa surface supérieure avec un faisceau laser selon ledit mode rafale ; **caractérisé en ce que**

   - ladite source laser est une source laser femtoseconde ;
   - dans lequel chacun desdits ensembles (5) d'impulsions laser dudit train d'impulsions comprend une première (1) et une seconde (2) impulsion avec un intervalle de temps (3) entre elles compris entre 5 ns et 50 ns, de préférence entre 10 ns et 40 ns, et plus préférablement environ 25 ns ;
   - dans lequel chacune desdites première (1) et seconde (2) impulsions a une densité d'énergie sur ladite surface supérieure comprise entre 0,5 $nJ/um^2$ et 50 $nJ/um^2$ ; et
   - dans lequel ledit train d'impulsions (5) est capable de structurer ladite surface supérieure.

2. Procédé selon la revendication 1, dans lequel il comprend, avant l'étape c), l'étape supplémentaire consistant à :

   - déterminer un seuil d'ablation dudit substrat transparent défini par une densité d'énergie par impulsion ;

lesdites première (1) et deuxième (2) impulsions ayant une densité d'énergie sur ladite surface supérieure définie par rapport audit seuil d'ablation.

3. Procédé selon la revendication 2, dans lequel ledit substrat transparent a un seuil d'ablation étant défini par une densité d'énergie par impulsion et en ce que ledit substrat transparent est structuré avec des impulsions laser ayant des densités d'énergie inférieures au seuil d'ablation de densité d'énergie de sorte que ladite surface supérieure dudit substrat transparent est structurée avec des dômes.

4. Procédé selon la revendication 3, dans lequel lesdits dômes sont formés avec conservation de la quantité de matériau.

5. Procédé selon la revendication 2, dans lequel ledit substrat transparent ayant un seuil d'ablation étant défini par une densité d'énergie par impulsion et en ce que ledit substrat transparent est structuré avec des impulsions laser ayant des densités d'énergie supérieures au seuil d'ablation de densité d'énergie de sorte que ladite surface supérieure dudit substrat transparent est structurée avec des cratères.

6. Procédé selon la revendication 5, dans lequel lesdits cratères sont formés avec l'ablation dudit substrat transparent.

7. Procédé selon l'une quelconque des revendications précédentes, dans lequel ladite première impulsion (1) a une densité d'énergie supérieure à celle de ladite seconde impulsion (2).

8. Procédé selon l'une quelconque des revendications précédentes dans lequel ledit substrat transparent est un substrat en verre, de préférence, un substrat en verre d'alcali-aluminosilicate.

9. Procédé selon l'une quelconque des revendications précédentes, dans lequel ledit faisceau laser est focalisé sur ladite surface supérieure dudit substrat transparent.

10. Procédé selon l'une quelconque des revendications 1 à 8, dans lequel ledit faisceau laser est focalisé sous ladite surface supérieure dudit substrat transparent.

11. Substrat transparent structuré susceptible d'être obtenu par un procédé selon la revendication 3 ou 4 et comprenant des structures en dôme ayant :

- une base essentiellement circulaire dont le périmètre est compris entre 1 um et 10 um, plus particulièrement entre 2 um et 8 um, et encore plus particulièrement entre 2,5 um et 5 um,
- une hauteur comprise entre 50 nm et 500 nm, plus particulièrement entre 60 nm et 300 nm, et encore plus particulièrement entre 100 nm et 200 nm,
- une densité de structure comprise entre 1000 et 20000 dômes par mm$^2$, plus particulièrement entre 3000 et 15000 dômes par mm$^2$, et encore plus particulièrement entre 5000 et 10000 dômes par mm$^2$.

12. Substrat transparent structuré selon la revendication 11, dans lequel il est structuré avec une densité d'énergie du faisceau laser sur la surface du substrat comprise entre 0,5 nJ/um$^2$/impulsion et 3,2 nJ/um$^2$/impulsion de sorte qu'il est structuré avec des dômes.

13. Système de structuration de substrats transparents à l'aide de rafales laser comprenant :

- un substrat transparent ayant une surface supérieure ;
- un dispositif d'usinage comprenant :

o une source laser,
o un système optique pour obtenir un faisceau laser de ladite source laser focalisé au voisinage de ladite surface supérieure de substrat transparent,

**caractérisé en ce que**
ladite source laser est une source laser femtoseconde pour émettre deux impulsions laser (1, 2) dans un mode rafale,

- ledit mode rafale définissant un train d'une première impulsion (1) et d'une seconde impulsion (2) avec un temps entre ladite première (1) et ladite seconde (2) impulsion compris entre 5 ns et 50 ns, de préférence entre 10 ns et 40 ns, et plus préférablement environ 25 ns,
- ladite première (1) impulsion et ladite seconde (2) impulsion laser ayant des densités d'énergie comprises entre 0,5 nJ/um$^2$ et 50 nJ/um$^2$,
- ledit train de première (1) et seconde (2) impulsions permettant de structurer ladite surface supérieure du substrat transparent.

14. Système selon la revendication 13, dans lequel ledit dispositif d'usinage comprend en outre :

- des moyens de déflection pour dévier ledit faisceau laser focalisé d'un premier point à un second point sur ladite surface supérieure.

15. Système selon la revendication 13 ou 14, dans lequel ledit dispositif d'usinage comprend en outre :

- des moyens d'entraînement pour déplacer ledit substrat transparent par rapport auxdits moyens de déflection.

*Fig.1*

EP 3 769 900 B1

*Fig. 2a*

*Fig. 2b*

*Fig.3a*

*Fig.3b*

*Fig. 4*

EP 3 769 900 B1

**F i g . 5a**

**F i g . 5b**

*Fig. 6*

**F i g . 7a**

**F i g . 7b**

Fig. 8a

Fig. 8b

Fig. 8c

Fig. 8d

Fig. 8e

Fig. 8f

**EP 3 769 900 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2965853 A
- DE 102018200029 A1